# EUROPÄISCHE PATENTANMELDUNG

(11) **EP 1 690 886 A1**
(43) Veröffentlichungstag der Anmeldung: **16.08.2006**
(21) Anmeldenummer: 05003013.9
(22) Anmeldetag: 12.02.2005
(51) Int. Cl.: C08G 77/20, D06M 15/643

(54) **Kombination von aminofunktionellen und acrylatofunktionellen Polyorganosiloxanen**

(71) Anmelder: Ciba Spezialitätenchemie Pfersee GmbH, 86462 Langweid a.Lech (DE)
(72) Erfinder: Chrobaczek, Harald, Dr., 86153 Augsburg (DE); Angele, Theodor, 86637 Wertingen (DE); Dauth, Jochen, Dr., 84489 Burghausen (DE)

(57) **Zusammenfassung**

Beschrieben werden Zusammensetzungen, welche aminofunktionelle Polyorganosiloxane und zusätzlich Polyorganosiloxane enthalten, die sich herstellen lassen durch Umsetzung von Polysiloxanen mit Si-H-Bindungen (H-Siloxanen) und speziellen Verbindungen mit Kohlenstoff-Kohlenstoff-Mehrfachbindungen. Die letztgenannten Verbindungen enthalten Acrylateinheiten. die Zusammensetzungen eignen sich für die Behandlung textiler Flächengebilde, denen hierdurch vorteilhafte Eigenschaften verliehen werden.

## Beschreibung

Die Erfindung betrifft Zusammensetzungen, welche sowohl Polysiloxane mit Aminogruppen als auch Polysiloxane mit Acrylatogruppen enthält. Die Zusammensetzungen können in Form einer wässrigen Dispersion vorliegen. Die Erfindung betrifft ferner die Verwendung solcher Zusammensetzungen bzw. Dispersionen zur Behandlung von Fasermaterialien.

Es ist bekannt, Fasermaterialien wie z.B. textile Flächengebilde in Form von Geweben oder Maschenware mit aminofunktionellen Polyorganosiloxanen zu behandeln, um den Textilien vorteilhafte Eigenschaften zu vermitteln. Dies ist in einer Vielzahl von Publikationen beschrieben. Bekannt sind ferner Polyorganosiloxane, welche Acrylateinheiten enthalten. Dies geht unter anderem hervor aus der EP-A 834 527, der EP-A 972 811, der WO 98/27174, der EP-A 716 114 und der EP-A 1 020 491. Schließlich beschreibt die EP-A 933 399 Polyorganosiloxane, welche durch eine Michael-Addition-ähnliche Reaktion aus aminofunktionellen Polysiloxanen und Diacrylaten oder Oligoacrylaten erhalten werden.

Werden mit aus dem Stand der Technik bekannten Polyorganosiloxanen textile Flächengebilde behandelt, z.B. im Rahmen eines Foulardprozesses, so zeigt sich, dass hierbei noch nicht optimale Ergebnisse erzielt werden. Insbesondere die hydrophilen Eigenschaften und/oder die sogenannten "appearance-after-washing"-Eigenschaften von Cellulose enthaltenden Textilien erreichen häufig nicht das gewünschte Niveau. Die appearance-after-washing (AAW)-Eigenschaften spiegeln das Knitterverhalten gewaschener Textilien wieder. Im Fall von Textilien aus Cellulose, z.B. Baumwolle, hat sich gezeigt, dass bei Ausrüstung mit einer Kombination aus herkömmlichen Cellulosevernetzern und bekannten Polyorganosiloxanen nach einem bekannten Trockenvernetzungsprozeß nicht die AAW-Effekte erreicht werden wie nach einem Feuchtvernetzungsprozeß.

Der vorliegenden Erfindung lag die Aufgabe zugrunde, Zusammensetzungen zur Verfügung zu stellen, welche sich hervorragend für die Behandlung von Fasermaterialien, z.B. von textilen Flächengebilden, eignen und diesen Fasermaterialien ausgezeichnete Eigenschaften verleihen. Insbesondere bestand die Aufgabe darin, Zusammensetzungen zur Verfügung zu stellen, welche es in Kombination mit herkömmlichen Cellulosevernetzern ermöglichen, Cellulose enthaltenden Textilien mittels eines Trockenvernetzungsverfahrens ähnlich gute AAW-Eigenschaften zu verleihen, wie es nach Feuchtvernetzungsverfahren mit Rezepturen aus dem Stand der Technik erreicht werden kann.

Die Aufgabe wurde gelöst durch eine Zusammensetzung, welche mindestens die Komponenten A und B und/oder ein Produkt enthält, welches durch chemische Reaktion zwischen Komponente A und Komponente B entsteht,
wobei Komponente A ein Polyorganosiloxan ist, welches eine oder mehrere Aminogruppen enthält und wobei
Komponente B ein Polyorganosiloxan ist, welches erhältlich ist durch Umsetzung einer ungesättigten Verbindung der Formel (I) oder der Formel (II) 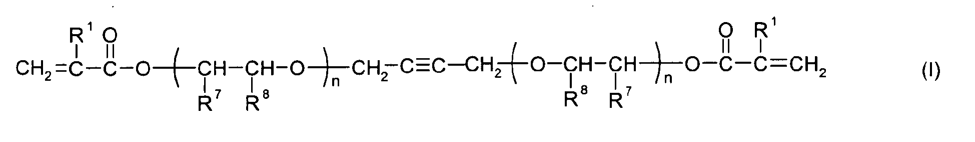 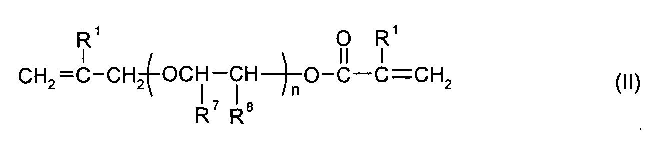 oder eines Gemischs von Verbindungen der Formel (I) und der Formel (II)
mit einem Polysiloxan der Formel (III) 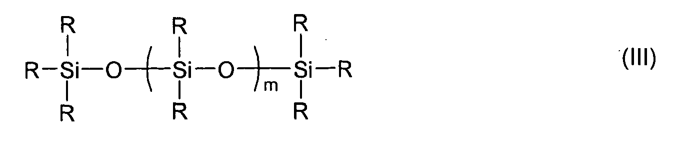 oder einem Gemisch solcher Polysiloxane in solchen Mengenverhältnissen, dass die Summe der Anzahl der Si-H-Gruppen in den eingesetzten Polysiloxanen der Formel (III) im wesentlichen ebenso groß ist wie die Summe der Anzahl der Kohlenstoff-Kohlenstoff-Doppelbindungen und der Anzahl der Kohlenstoff-Kohlenstoff-Dreifachbindungen in den eingesetzten Verbindungen der Formel (I) und (II),
wobei
R¹ für H oder CH₃ steht,
alle anwesenden Reste R unabhängig voneinander für Wasserstoff oder für einen Alkylrest mit 1 bis 4 Kohlenstoffatomen stehen, wobei jedoch mindestens 2 aller anwesenden Reste R für Wasserstoff stehen und wobei nicht zwei an das gleiche Siliciumatom gebundene Reste R gleichzeitig für Wasserstoff stehen,
wobei
m für eine Zahl von 10 bis 50 steht,
n für eine Zahl von 0 bis 20, vorzugsweise von 2 bis 20, steht,
wobei in jeder Einheit 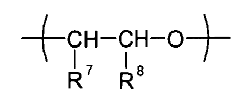 einer der Reste R⁷ und R⁸ für Wasserstoff und der andere für Wasserstoff oder eine Methylgruppe steht.

Die oben genannten erfindungsgemäßen Zusammensetzungen lassen sich in sehr vorteilhafter Weise für die Behandlung von Fasermaterialien verwenden und verleihen diesen hydrophile Eigenschaften und gute AAW-Eigenschaften. Die Fasermaterialien sind bevorzugt textile Flächengebilde in Form von Geweben, Maschenware oder Vliesen (non-wovens). Insbesondere bei Cellulosefasern, z.B. Baumwollfasern, enthaltenden Textilien führt die Behandlung mit erfindungsgemäßen Zusammensetzungen in Kombination mit bekannten Cellulosevernetzern zu einem hohen Niveau der Knitterbeständigkeit (AAW). Als Cellulosevernetzer eignen sich die dem Fachmann bekannten Produkte, insbesondere N, N'-Dimethyloldihydroxyethylenharnstoff (DMDHEU), zugänglich aus Harnstoff und Glyoxal und nachfolgende Methylolierung mit Formaldehyd, oder veretherte, z.B. mit Methanol voll- oder teilveretherte, DMDHEU. Eine Reihe von Cellulosevernetzerformulierungen ist unter dem Markennamen KNITTEX® von der Firma Ciba Spezialitätenchemie Pfersee GmbH, DE, erhältlich.
Es ist von Vorteil, die erfindungsgemäßen Zusammensetzungen in Form von wässrigen Dispersionen für die Behandlung der textilen Flächengebilde aus Fasermaterialien zu verwenden. Die Applikation kann in diesem Fall in Form eines bekannten Foulardverfahrens erfolgen. Nach der Applikation werden die textilen Flächengebilde in üblicher Weise getrocknet und gegebenenfalls anschließend bei weiter erhöhter Temperatur in bekannter Weise kondensiert.
Falls die erfindungsgemäßen Zusammensetzungen in der bevorzugten Ausführungsform in Form wässriger Dispersionen vorliegen, so enthalten diese neben den oben aufgeführten Komponenten A und B noch Wasser als Komponente C und ein Hilfsmittel als Komponente D. Hierbei ist dieses Hilfsmittel ausgewählt aus der Gruppe, welche einen oder mehrere Dispergatoren, Polyvinylalkohol (PVA) und Guarmehl (GuM) oder Mischungen aus 2 oder mehr der genannten Produkte umfasst. Dabei ist es von Vorteil, wenn die Dispersion die Komponenten A bis D in in folgenden Mengenverhältnissen relativ zueinander enthält
A 5 bis 20 Gew.teile
B 2 bis 5 Gew.teile
C 50 bis 80 Gew.teile
D 2 bis 10 Gew.teile

Vor Applikation auf textile Flächengebilde können diese Dispersionen mit Wasser auf übliche Konzentrationen verdünnt und es können weitere, für Textilausrüstung übliche, Mittel zugesetzt werden.
Als Dispergatoren können handelsübliche oberflächenaktive Produkte verwendet werden. Gut geeignet sind nichtionogene Tenside wie ethoxilierte Alkohole oder ethoxilierte Fettsäuren, daneben kationaktive Tenside wie quaternäre Ammoniumsalze.
An Stelle von Dispergatoren oder zusätzlich dazu können Polyvinylalkohol (PVA) und/oder Guarmehl (GuM) als Hilfsmittel (Komponente D) verwendet werden, was aber natürlich nicht heißt, dass in jedem beliebigen Einzelfall jedes Hilfsmittel aus der genannten Gruppe geeignet ist. Das Hilfsmittel kann auch PVA neben Dispergator(en) und/oder GuM enthalten oder nur aus PVA bestehen. In diesem Fall verwendet man vorzugsweise PVA mit einem mittleren Molgewicht im Bereich von 25.000 bis 100.000.
Ebenso kann das Hilfsmittel neben Dispergator(en) und/oder PVA noch GuM enthalten oder nur aus GuM bestehen. Bevorzugt verwendet man hierzu GuM, das durch folgende Daten charakterisiert wird: Viskosität einer 1 % Lösung bei 25°C: 3,5 - 3,7 Pa.s (3500 - 3700 cP) mittlere Teilchengröße: ca. 75 · 10⁻⁶ m. GuM ist im Handel erhältlich, z. B. von der Firma Worlée-Chemie GmbH, DE. Guarmehl (GuM) ist ein aus der Literatur bekanntes Produkt, siehe z.B. "Römpp Chemie Lexikon", Georg Thieme Verlag Stuttgart, New York, 9. Auflage, 1990, Seite 1666.
PVA und GuM können bei erfindungsgemäßen Dispersionen eine erhöhte Stabilität der wässrigen Dispersion bewirken, indem sie als Schutzkolloid fungieren.

Erfindungsgemäße Zusammensetzungen lassen sich auch vorteilhaft bei Haushaltswäschen verwenden, z.B. als Zusatz zu Weichspülmitteln bei der Wäsche von Textilien in Haushaltswaschmaschinen. Diese kann nach üblichen Methoden und mit üblichen Zusätzen durchgeführt werden.

Eine besonders bevorzugte Ausführungsform erfindungsgemäßer Dispersionen besteht darin, dass bei ihrer Herstellung als Hilfsmittel ein Gemisch verwendet wird, das einen oder mehrere kationaktive Dispergatoren und zusätzlich PVA und/oder GuM enthält. Als kationaktive Dispergatoren sind hierbei die oben bereits genannten Produkte gut geeignet.
Neben den genannten Komponenten A, B, C und D können erfindungsgemäße Dispersionen noch weitere Komponenten in dem Fachmann bekannten Mengen enthalten, z.B. die bereits erwähnten Cellulosevernetzer, Wachse, Fluor-enthaltende Polymere, weitere Polysiloxane und/oder Flammschutzmittel.

Die erfindungsgemäßen Zusammensetzungen enthalten eine Komponente A und eine Komponente B, welche ein ganz spezielles Polyorganosiloxan darstellt.

An Stelle der Komponenten A und B oder zusätzlich hierzu können erfindungsgemäße Dispersionen auch ein Produkt enthalten, das durch eine chemische Reaktion zwischen Komponente A und Komponente B entsteht.

Komponente A ist ein Polyorganosiloxan, welches eine oder mehrere Aminogruppen enthält. Es handelt sich hierbei vorzugsweise um primäre und/oder sekundäre Aminogruppen. Solche aminofunktionellen Polyorganosiloxane sind bekannte handelsübliche Produkte, welche unter anderem von den Firmen Wacker, DE, und Dow Corning bezogen werden können. Vielfach sind solche aminofunktionellen Polyorganosiloxane bereits in Form wässriger Dispersionen auf dem Markt zu erhalten. Die Aminogruppen von Komponente A befinden sich vorzugsweise in Seitenketten der Polysiloxankette, können jedoch auch an die endständigen Siliciumatome der Kette gebunden sein.
Die Herstellung von aminofunktionellen Polyorganosiloxanen (Komponente A) kann nach Methoden erfolgen, welche dem Fachmann aus dem Stand der Technik bekannt sind. Eine Möglichkeit besteht z.B. darin, über eine bekannte Äquilibrierungsreaktion lineare und/oder cyclische Oligo- oder Polydialkylsiloxane mit Silanen der Formel (VIII) in Gegenwart alkalischer Katalysatoren umzusetzen, 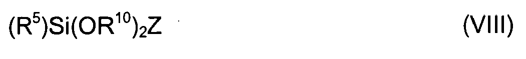 wobei Z die unten erläuterte Bedeutung besitzt,
R⁵ für OH, OR³ oder für R³ steht,
wobei R³ ein Alkylrest mit 1 bis 4 Kohlenstoffatomen ist und wobei
R¹⁰ für CH₃ oder CH₂-CH₃ steht.
Eine weitere, ebenfalls aus der Literatur bekannte Möglichkeit zur Herstellung aminofunktioneller Polyorganosiloxane (Komponente A) besteht darin, Polyorganosiloxane ("H-Siloxane") welche Si-H-Bindungen enthalten, an die C=C-Doppelbindung von Allylaminen oder Allylhalogeniden zu addieren, wobei im Fall der Verwendung von Allylhalogeniden anschließend das Halogenatom durch Reaktion mit einem Amin substituiert wird.

Als Komponente A besonders gut geeignete Polyorganosiloxane weisen eine Struktur gemäß Formel (IV) auf 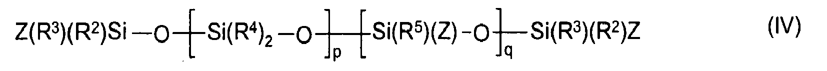 wobei die anwesenden Einheiten -Si(R⁵)(Z)-O- und -Si(R⁴)₂-O- beliebig über die Polysiloxankette verteilt sein können,
wobei
das Verhältnis p:q im Bereich von 3:1 bis 130:1 liegt,
alle anwesenden Reste Z unabhängig voneinander für R³ oder für einen Rest der Formel (V) stehen, jedoch mindestens einer der Reste Z für einen Rest der Formel (V) steht 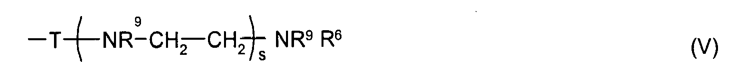 wobei
alle anwesenden Reste R² für R³, vorzugsweise jedoch für OCH₃, OC₂H₅ oder für OH stehen,
s den Wert 0, 1 oder 2 besitzt und
alle anwesenden Reste R⁵ für OH, OR³ oder für R⁴ stehen,
alle anwesenden Reste R³ für einen Alkylrest mit 1 bis 4 Kohlenstoffatomen stehen,
alle anwesenden Reste R⁴ für R³ oder für einen Rest der Formel (VI) stehen, 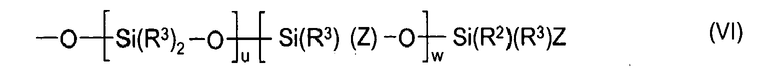 alle anwesenden Reste R⁹ unabhängig voneinander für Wasserstoff oder für R³ stehen,
alle anwesenden Reste R⁶ für Wasserstoff oder für einen Alkylrest mit 1 bis 12 Kohlenstoffatomen oder für einen Rest der Formel (VII) stehen 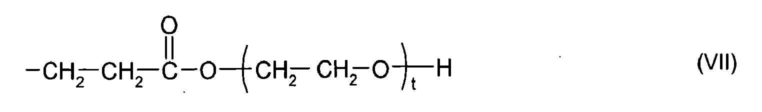 wobei das Verhältnis u:w im Bereich von 3:1 bis 130:1 liegt
und wobei die Werte von p, q, u und w so gewählt sind, dass Komponente A durchschnittlich 50 bis 800 Siliciumatome enthält,
wobei t eine Zahl von 2 bis 20 ist,
wobei T für einen zweiwertigen linearen oder verzweigten Alkylenrest mit 1 bis 4 Kohlenstoffatomen steht,
wobei ein Teil oder alle der in den Resten Z vorhandenen Stickstoffatome in quaternisierter Form vorliegen können.
Besonders gut geeignet als Komponente A sind Polysiloxane der Formel (IV), in denen alle an den Kettenenden anwesenden Reste Z für einen Rest R³ stehen und mindestens einer der Reste Z, welche sich in Einheiten der Formel 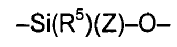 befinden, für einen Rest der Formel 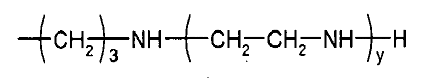 oder der Formel 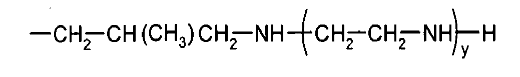 steht, worin y entweder den Wert 0 oder 1 besitzt.

Die Komponente B erfindungsgemäßer Zusammensetzungen ist ein spezielles Poyorganosiloxan. Ein solches Polyorganosiloxan lässt sich herstellen, indem man eine Verbindung der Formel (I) oder Formel (II)

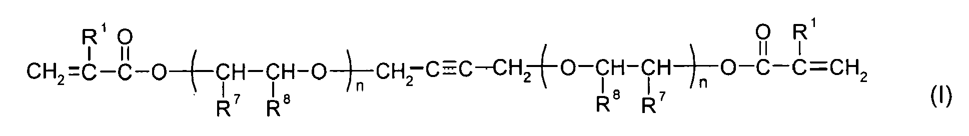

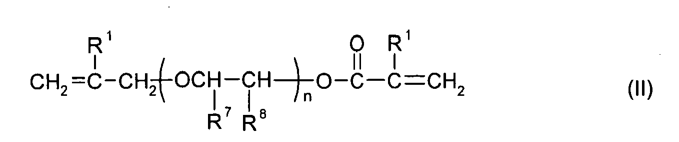

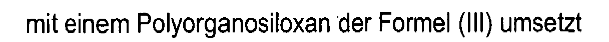

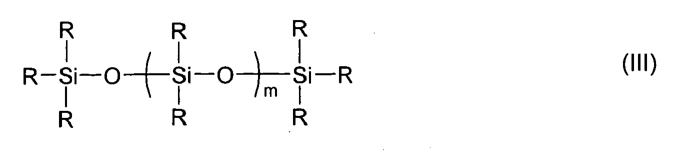

An Stelle einer einzigen Verbindung der Formel (I) oder der Formel (II) kann auch ein Gemisch solcher Verbindungen verwendet werden. Ebenso kann auch ein Gemisch von Polysiloxanen der Formel (III) verwendet werden. Diese Umsetzung muß in solchen Mengenverhältnissen erfolgen, dass die Summe der Anzahl der Si-H-Gruppen in den eingesetzten Polyorganosiloxanen der Formel (III) in etwa so groß ist wie die Summe der Anzahl der C≡C-Dreifachbindungen in den Verbindungen der Formel (I) und der Anzahl der C=C-Doppelbindungen in den Verbindungen der Formel (II).

Ein als Komponente B geeignetes acrylatofunktionelles Polysiloxan ist von der Firma Wacker-Chemie GmbH, DE, erhältlich.

Die Verbindungen der Formel (I) lassen sich nach bekannten Methoden herstellen durch Alkoxilierung von Butindiol (1.4) und anschließende Veresterung mit Acrylsäure oder Methacrylsäure oder Umesterung von Estern dieser Säuren mit Butindiol (1.4) oder alkoxiliertem Butindiol (1.4). Wenn n in Formel (I) den Wert 0 besitzt, entfällt natürlich die Alkoxilierung.

Die Verbindungen der Formel (II) können erhalten werden durch Alkoxilierung von (Meth-)Allylalkohol und anschließende Veresterung bzw. Umesterung wie oben am Beispiel des Butindiols beschrieben, wobei wiederum im Fall n=0 die Alkoxilierung entfällt.

Polyorganosiloxane der Formel (III)

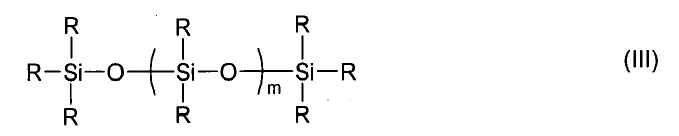

sind Produkte, in denen pro Molekül durchschnittlich mindestens 2 der Reste R für Wasserstoff stehen, jedoch sind nicht 2 Wasserstoffatome an das gleiche Siliciumatom gebunden. Der Wert von m in Formel (III) liegt im Bereich zwischen 10 und 50.

Die Umsetzung von Polysiloxanen der Formel (III) mit Verbindungen der Formel (I) bzw. der Formel (II) findet vorzugsweise in Gegenwart eines Katalysators oder eines Gemischs von Katalysatoren statt.
Geeignete Reaktionsbedingungen und Katalysatoren für diese Umsetzungen, bei denen sich jeweils eine Si-H-Einheit an eine C-C-Mehrfachbindung addiert, sind in der eingangs zitierten Literatur aufgeführt (EP- und WO-Schriften).

Erfindungsgemäße Zusammensetzungen werden vorzugsweise, wie in der Textilausrüstung üblich, in Form wässriger Dispersionen verwendet. Die Art und Menge der Komponenten dieser Dispersionen wurden oben bereits beschrieben.

Wässrige Dispersionen erfindungsgemäßer Zusammensetzungen können nach bekannten Methoden hergestellt werden, z.B. indem man die Komponenten A und B mischt und in eine Mischung aus Wasser und Hilfsmittel einrührt, woran sich gegebenenfalls eine Hochdruckhomogenisierung anschließt.
Ein bevorzugtes Verfahren zur Herstellung von wässrigen Dispersionen erfindungsgemäßer Zusammensetzungen ist gekennzeichnet durch folgende, nacheinander durchgeführte Schritte a) bis e)
a) Herstellung einer Mischung aus den Komponenten A und B
b) Lösen der bei Schritt a) hergestellten Mischung in einem wasserfreien organischen Lösungsmittel, von dem bei Raumtemperatur nicht mehr als 5 g in 100 g Wasser löslich sind.
c) Vermischen der bei Schritt b) erhaltenen Lösung mit Wasser oder einer wässrigen
   Lösung einer Säure.
d) Homogenisieren der bei Schritt c) erhaltenen Mischung, vorzugsweise mittels Hochdruckhomogenisierung.
e) Entfernen von 90 bis 100 % des bei Schritt b) verwendeten organischen Lösungsmittels, wobei Schritt a) und/oder Schritt c) unter Mitverwendung eines Hilfsmittels durchgeführt werden, das ausgewählt ist aus der Gruppe, die einen Dispergator oder ein Gemisch von Dispergatoren, Polyvinylalkohol (PVA) und Guarmehl (GuM) umfasst.

### Schritt b):

Bei diesem Verfahrensschritt wird eine Lösung des gemäß Schritt a) hergestellten Gemischs in einem organischen Lösungsmittel hergestellt. Es kann auch ein Gemisch von zwei oder mehr organischen Lösungsmitteln verwendet werden. Solche Gemische werden ebenfalls nachfolgend als "organisches Lösungsmittel" bezeichnet. Gegebenenfalls erfolgt die Herstellung der Lösung bei erhöhter Temperatur.
Das für Schritt b) verwendete organische Lösungsmittel muß wasserfrei sein. Dies bedeutet nicht, dass es überhaupt kein Wasser enthalten darf, jedoch darf der Wassergehalt dieses Lösungsmittels nicht höher sein als 2 Gew%. Natürlich sollen auch das verwendete Polyorganosiloxan und die verwendeten Verbindungen der Formel (I) und der Formel (II) nicht mehr als etwa 2 Gew% Wasser enthalten.
Darüber hinaus darf das verwendete Lösungsmittel nur eine geringe Wasserlöslichkeit besitzen. Bei Raumtemperatur darf diese Löslichkeit nicht größer sein als 5 g Lösungsmittel in 100 g Wasser.
Als Lösungsmittel geeignet sind höhere Alkohole, Ester, Ketone, z.B. Dialkylketone aber auch aromatische Kohlenwasserstoffe wie Toluol oder Xylol, sofern sie die oben genannten Bedingungen erfüllen und das verwendete Polyorganosiloxan(gemisch) und die verwendete Verbindung der Formel (I) oder der Formel (II) in der gewünschten Konzentration in dem Lösungsmittel löslich sind, wobei zum Lösen gegebenenfalls erhöhte Temperatur erforderlich sein kann. Bevorzugt werden im Hinblick auf Verfahrensschritt e) (Entfernen von mindestens 90 % des Lösungsmittels) solche Lösungsmittel verwendet, die sich gut aus den bei Schritt d) hergestellten Dispersionen entfernen lassen. Eine einfache Methode hierzu ist Destillation, gegebenenfalls unter vermindertem Druck. Zu den Lösungsmitteln, die sich auf diese Art zu mindestens 90 % entfernen lassen, gehören Lösungsmittel mit einem Siedepunkt von weniger als 100°C bei Raumtemperatur, Lösungsmittel, die mit Wasser ein Azeotrop bilden oder Lösungsmittel, die bei vermindertem Druck einen höheren Dampfdruck aufweisen als Wasser. Besonders gut geeignet als Lösungsmittel sind Methyl-isobutyl-keton und n-Butyl-acetat; beide lassen sich in Schritt e) gut als Azeotrop mit Wasser destillativ entfernen.

In Schritt c) kann entweder nur Wasser oder eine wässrige Lösung einer Säure mit der in Schritt b) erhaltenen Lösung vermischt werden. Als Säuren kommen insbesondere in Frage Schwefelsäure, Salzsäure oder Carbonsäuren mit 1 bis 6 Kohlenstoffatomen, z.B. Essigsäure. Falls Säure verwendet wird, sollte die wässrige Lösung der Säure einen pH-Wert im Bereich von 3 bis 6,5 bei 20°C aufweisen.

In Schritt d) wird die Mischung, welche nach Schritt c) erhalten wurde, einer Homogenisierung unterworfen. Dies kann mittels Rühren, gegebenenfalls bei erhöhter Temperatur, erfolgen. Vorteilhaft ist vielfach jedoch eine Hochdruckhomogenisierung.
Die Hochdruckhomogenisierung wird vorzugsweise bei einem Druck im Bereich von 50 bis 1000 bar durchgeführt, ein besonders günstiger Bereich sind 50 bis 350 bar. Der Druck lässt sich bei einer Reihe bekannter Apparaturen von der unten beschriebenen Art gezielt einstellen und steuern.
Angaben zu Vorrichtungen und Verfahren für Hochdruckhomogenisierung können der
WO 99/15263 entnommen werden.
Zur Durchführung der Hochdruckhomogenisierung gemäß Verfahrensschritt d) eignen sich Gaulin-Geräte der Firma Manton-Gaulin Corp. USA bzw. der Firma APV-Deutschland GmbH, Lübeck, DE, z.B. die Type "Gaulin-Homogenisator LAB 60-7 TBS" oder die MC-Typen dieser Firma. Ferner geeignet sind Geräte der "Microfluidizer"-Serie der Firma Microfluidics, USA.

### Schritt e):

Der letzte Schritt des Verfahrens, durch das erfindungsgemäße Dispersionen hergestellt werden können, besteht darin, 90 % bis 100 % der Menge des für Schritt b) verwendeten Lösungsmittels zu entfernen. Die teilweise oder vollständige Entfernung des Lösungsmittels kann nach bekannten Methoden erfolgen. Im Normalfall ist eine Destillation zweckmäßig. Durch Auswahl geeigneter Lösungsmitteleigenschaften kann, wie oben beschrieben, die destillative Abtrennung ermöglicht werden.

Es ist von Vorteil, wenn die in Schritt b) hergestellte Lösung der Komponenten A und B in einem organischen Lösungsmittel 5 bis 50 Gew%, vorzugsweise 10 bis 40 Gew%, an Polyorganosiloxanen enthält. Diese Zahlen beziehen sich auf die Summe aller verwendeten Polyorganosiloxane.

Die Erfindung wird nachfolgend durch Ausführungsbeispiele veranschaulicht.

### Beispiel 1

Herstellung einer wässrigen Dispersion einer Komponente B.
50 g eines tetraacrylatofunktionellen Polydimethylsiloxans mit einer Viskosität von 100 bis 150 mPa.s bei 25°C (entsprechend Komponente B) wurden bei Raumtemperatur in 100 g Methyl-isobutylketon gelöst. Anschließend wurde die erhaltene Lösung mit einer Zusammensetzung vermischt, welche

| | |
|---|---|
| 185 g | Wasser |
| 10 g | Dipropylenglykol |
| 13 g | einer Mischung aus nichtionogenen und kationischen Dispergatoren |
| 7 g | eines C13-Alkohols |

und
0,8 g Phosphorsäure enthielt.
Dann wurde mittels Rühren homogenisiert und anschließend mittels Hochdruckemulgierung eine Voremulsion hergestellt. Aus dieser Voremulsion wurde die Hauptmenge des organischen Lösungsmittels durch Destillation entfernt. Man erhielt eine stabile, gelb gefärbte wässrige Dispersion. Diese Dispersion enthielt kein aminofunktionelles Polysiloxan.

### Beispiel 2

Herstellung einer wässrigen Dispersion, welche ein aminofunktionelles (Komponente A) und ein acrylatofunktionelles (Komponente B) Polysiloxan enthält.
Es wurden bei Raumtemperatur miteinander vermischt:
10 g der gemäß Beispiel 1 hergestellten Dispersion (Komponente B enthaltend)
50 g einer käuflichen wässrigen Dispersion eines aminofunktionellen Polyorganosiloxans (Diese Dispersion enthielt etwa 35 Gew% Polysiloxan, das als Komponente A fungierte, 60 Gew% Wasser und etwa 4 % nichtionogene Dispergatoren).

### Beispiel 3

Herstellung einer wässrigen Dispersion, welche ein Produkt enthält, das sich durch chemische Reaktion zwischen einem aminofunktionellen Polyorganosiloxan (Komponente A) und einem acrylatofunktionellen Polyorganosiloxan (Komponente B) bildet.
In 300 g Methyl-isobutylketon (MIBK) wurden gelöst
22,5 g tetraacrylatofunktionelles Polysiloxan mit einer Viskosität von 100 bis 150 mPa.s bei 25°C (Komponente B)
78 g eines aminofunktionellen Polydimethylsiloxans, das N-Aminoethyl-3-aminopropyl-Seitenketten enthielt (Komponente A).
Zu dieser Lösung wurde eine Mischung zugegeben, welche aus

| | |
|---|---|
| 20 g | einer Mischung von nichtionogenen und kationischen Dispergatoren |
| 20 g | 1,2 Propylenglykol |
| 6 g | 60 %iger Essigsäure |
| 560 g | Wasser |

bestand. Daraufhin wurde zuerst durch Rühren, dann mittels Hochdruckhomogenisierung bei 60°C/10 Minuten eine wässrige Dispersion hergestellt, welche noch MIBK enthielt. Letzteres wurde zum größten Teil durch Destillation bei ca. 70°C und unter vermindertem Druck entfernt. Man erhielt eine stabile, opaleszente Dispersion

### Beispiel 4

Gewebe aus 100 % Baumwolle wurden mittels eines Foulardprozesses mit wässrigen Flotten behandelt. Anschließend wurden die Gewebe, wie üblich, abgequetscht, 10 Minuten bei 110°C getrocknet und dann 5 Minuten bei 150°C kondensiert. Die so behandelten Gewebe wurden 3 mal bei 60°C gewaschen. Anschließend wurde das Knitterverhalten nach der in DIN EN ISO 15487 (Ausgabe Februar 2002) beschriebenen Methode bestimmt.
Als wässrige Flotten wurden hierbei eingesetzt:

| | | |
|---|---|---|
| Flotte a): | 60 g/l | Dispersion gemäß Beispiel 2 |
| | 40 g/l | eines handelsüblichen Cellulosevernetzers (KNITTEX® FEL, Ciba Spezialitätenchemie Pfersee GmbH, DE) |
| | 24 g/l | einer handelsüblichen Katalysatorformulierung für Cellulosevernetzung (KNITTEX®-KATALYSATOR MO, Ciba Spezialitätenchemie Pfersee GmbH, DE) |
| | 1 ml/l | 60 %ige Essigsäure |

| | |
|---|---|
| Flotte b): | wie Flotte a) aber nicht mit 60 g/l Dispersion von Beispiel 2, sondern stattdessen mit 45 g/l Dispersion gemäß Beispiel 3 |
| Flotte c): | wie Flotte b) aber mit 90 g/l Dispersion statt 45 g/l |
| Flotte d): | (Vergleich, nicht erfindungsgemäß): wie Flotte a), aber mit 60 g/l der Dispersion des aminofunktionellen Polysiloxans, das für Beispiel 2 verwendet wurde. Flotte d) enthielt also eine Komponente A), aber keine Komponente B). |

Die Werte der nach dreimaliger Wäsche mittels der genannten DIN-Methode gefundenen Knittereigenschaften zeigt die folgende Tabelle. Hierbei bedeutet ein höherer Wert der Note für das Knitterverhalten eine bessere Knitterbeständigkeit.

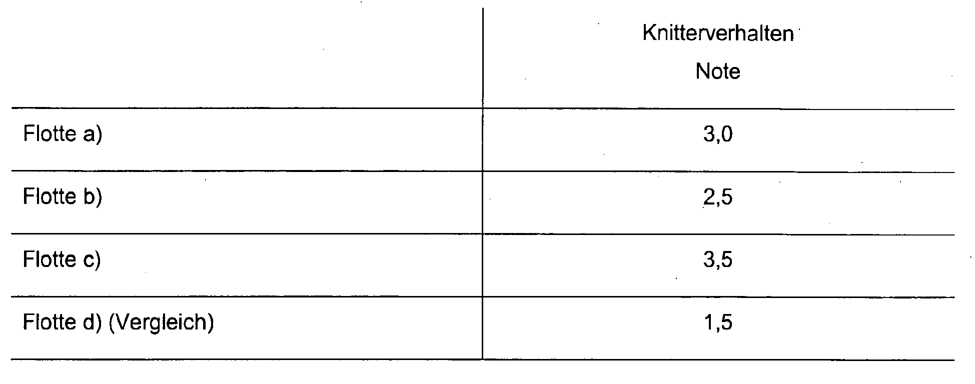

## Patentansprüche

1. Zusammensetzung, welche mindestens die Komponenten A und B und/oder ein Produkt enthält, welches durch chemische Reaktion zwischen Komponente A und Komponente B entsteht,
wobei Komponente A ein Polyorganosiloxan ist, welches eine oder mehrere Aminogruppen enthält und wobei
Komponente B ein Polyorganosiloxan ist, welches erhältlich ist durch Umsetzung einer ungesättigten Verbindung der Formel (I) oder der Formel (II) 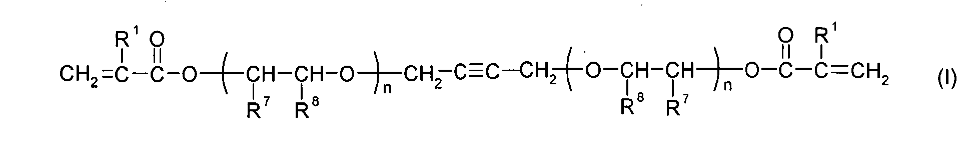 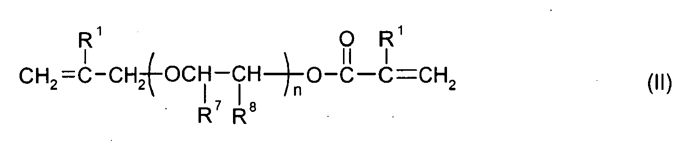 oder eines Gemischs von Verbindungen der Formel (I) und der Formel (II)
mit einem Polysiloxan der Formel (III) 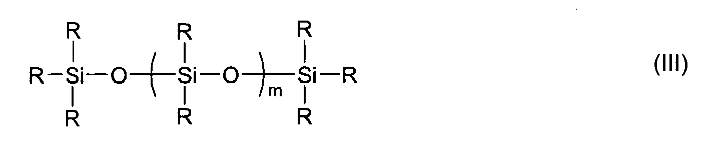 oder einem Gemisch solcher Polysiloxane in solchen Mengenverhältnissen, dass die Summe der Anzahl der Si-H-Gruppen in den eingesetzten Polysiloxanen der Formel (III) im wesentlichen ebenso groß ist wie die Summe der Anzahl der Kohlenstoff-Kohlenstoff-Doppelbindungen und der Anzahl der Kohlenstoff-Kohlenstoff-Dreifachbindungen in den eingesetzten Verbindungen der Formel (I) und (II),
wobei
R¹ für H oder CH₃ steht,
alle anwesenden Reste R unabhängig voneinander für Wasserstoff oder für einen Alkylrest mit 1 bis 4 Kohlenstoffatomen stehen, wobei jedoch mindestens 2 aller anwesenden Reste R für Wasserstoff stehen und wobei nicht zwei an das gleiche Siliciumatom gebundene Reste R gleichzeitig für Wasserstoff stehen,
wobei
m für eine Zahl von 10 bis 50 steht,
n für eine Zahl von 0 bis 20, vorzugsweise von 2 bis 20, steht,
wobei in jeder Einheit 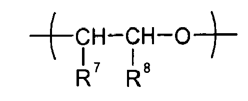 einer der Reste R⁷ und R⁸ für Wasserstoff und der andere für Wasserstoff oder eine Methylgruppe steht.

2. Wässrige Dispersion, welche eine Zusammensetzung nach Anspruch 1 und zusätzlich als Komponente C Wasser und als Komponente D ein Hilfsmittel enthält, das ausgewählt ist aus der Gruppe, die einen oder mehrere Dispergatoren, Polyvinylalkohol und Guarmehl (GuM) und Mischungen solcher Produkte umfasst.

3. Dispersion nach Anspruch 2, **dadurch gekennzeichnet, dass** sie die Komponenten A bis D in folgenden Mengenverhältnissen relativ zueinander enthält
A 5 bis 20 Gew.teile
B 2 bis 5 Gew.teile
C 50 bis 80 Gew.teile
D 2 bis 10 Gew.teile

4. Dispersion nach Anspruch 2 oder 3, **dadurch gekennzeichnet, dass** Komponente A ein Polyorganosiloxan ist, das eine Struktur gemäß Formel (IV) aufweist 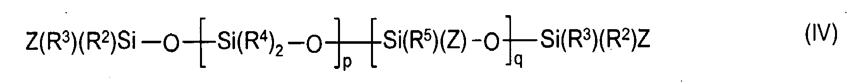 wobei die anwesenden Einheiten -Si(R⁵)(Z)-O- und -Si(R4)₂-O- beliebig über die Polysiloxankette verteilt sein können,
wobei
das Verhältnis p:q im Bereich von 3:1 bis 130:1 liegt,
alle anwesenden Reste Z unabhängig voneinander für R³ oder für einen Rest der Formel (V) stehen, jedoch mindestens einer der Reste Z für einen Rest der Formel (V) steht 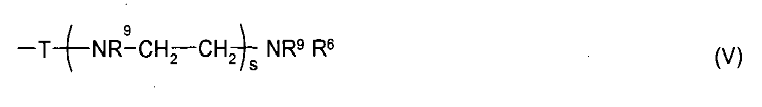 wobei
alle anwesenden Reste R² für R³, vorzugsweise jedoch für OCH₃, OC₂H₅ oder für OH stehen,
s den Wert 0, 1 oder 2 besitzt und
alle anwesenden Reste R⁵ für OH, OR³ oder für R⁴ stehen,
alle anwesenden Reste R³ für einen Alkylrest mit 1 bis 4 Kohlenstoffatomen stehen,
alle anwesenden Reste R⁴ für R³ oder für einen Rest der Formel (VI) stehen, 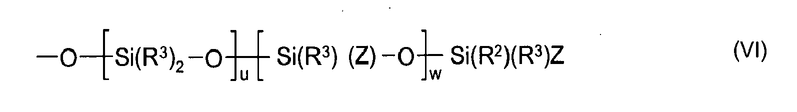 alle anwesenden Reste R⁹ unabhängig voneinander für Wasserstoff oder für R³ stehen, alle anwesenden Reste R⁶ für Wasserstoff oder für einen Alkylrest mit 1 bis 12 Kohlenstoffatomen oder für einen Rest der Formel (VII) stehen 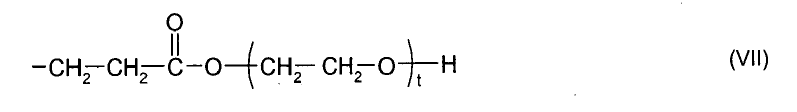 wobei das Verhältnis u:w im Bereich von 3:1 bis 130:1 liegt
und wobei die Werte von p, q, u und w so gewählt sind, dass Komponente A durchschnittlich 50 bis 800 Siliciumatome enthält,
wobei t eine Zahl von 2 bis 20 ist,
wobei T für einen zweiwertigen linearen oder verzweigten Alkylenrest mit 1 bis 4 Kohlenstoffatomen steht,
wobei ein Teil oder alle der in den Resten Z vorhandenen Stickstoffatome in quaternisierter Form vorliegen können.

5. Dispersion nach Anspruch 4, **dadurch gekennzeichnet, dass** alle an den Kettenenden der Komponente A befindlichen Reste Z für einen Rest R³ stehen.

6. Verfahren zur Herstellung einer Dispersion gemäß einem oder mehreren der Ansprüche 2 bis 5, **gekennzeichnet durch** folgende, nacheinander durchgeführte Schritte a) bis e)
a) Herstellung einer Mischung aus den Komponenten A und B
b) Lösen der bei Schritt a) hergestellten Mischung in einem wasserfreien organischen Lösungsmittel, von dem bei Raumtemperatur nicht mehr als 5 g in 100 g Wasser löslich sind.
c) Vermischen der bei Schritt b) erhaltenen Lösung mit Wasser oder einer wässrigen Lösung einer Säure.
d) Homogenisieren der bei Schritt c) erhaltenen Mischung, vorzugsweise mittels Hochdruckhomogenisierung.
e) Entfernen von 90 bis 100 % des bei Schritt b) verwendeten organischen Lösungsmittels,
wobei Schritt a) und/oder Schritt c) unter Mitverwendung eines Hilfsmittels durchgeführt werden, das ausgewählt ist aus der Gruppe, die einen Dispergator oder ein Gemisch von Dispergatoren, Polyvinylalkohol (PVA) und Guarmehl (GuM) umfasst.

7. Verfahren nach Anspruch 6, **dadurch gekennzeichnet, dass** die in Schritt b) hergestellte Lösung 5 bis 50 Gew% an Polyorganosiloxanen enthält, vorzugsweise 10 bis 40 Gew%.

8. Verwendung einer Zusammensetzung oder Dispersion gemäß einem oder mehreren der Ansprüche 1 bis 5 zur Behandlung von Fasermaterialien.

9. Verwendung nach Anspruch 8, **dadurch gekennzeichnet, dass** die Fasermaterialien textile Flächengebilde in Form von Geweben, Maschenware oder Vliesen (non-wovens) sind.
